# EUROPEAN PATENT SPECIFICATION

(11) **EP 4 045 388 B1**
(45) Date of publication and mention of the grant of the patent: **09.09.2026**
(21) Application number: 20731481.6
(22) Date of filing: 11.06.2020
(51) Int. Cl.: B62D 25/16

(54) **VEHICLE COMPRISING A DEVICE FOR ANCHORING TO A TUBE ASSOCIATED TO A VEHICLE AND TO A FENDER ASSOCIABLE TO THE VEHICLE**
FAHRZEUG MIT EINER VORRICHTUNG ZUR VERANKERUNG AN EINEM ROHR, DAS EINEM FAHRZEUG ZUGEORDNET IST, UND AN EINEM DEM FAHRZEUG ZUORDENBAREM KOTFLÜGEL
VEHICULE COMPRENANT UN DISPOSITIF D'ANCRAGE À UN TUBE ASSOCIÉ À UN VÉHICULE ET À UN PARE-CHOCS POUVANT ÊTRE ASSOCIÉ AU VÉHICULE

(30) Priority: 18.10.2019 IT 201900019253
(43) Date of publication of application: 24.08.2022
(73) Proprietor: Lago Accessori S.r.l., 35014 Fontaniva (PD) (IT)
(72) Inventor: LAGO, Fabio, 35013 CITTADELLA (IT)
(74) Representative: Cantaluppi, Stefano
(86) International application number: PCT/EP2020/066167
(87) International publication number: WO 2021/073784

(56) References cited:
- EP-A1- 1 209 067
- EP-A1- 3 163 094
- DE-A1- 2 921 160
- DE-U1- 29 708 681
- DE-U1- 7 628 148
- GB-A- 2 560 064

## Description

The present invention is related to a device for anchoring to a tube associated to a vehicle and to a fender associable to the vehicle, particularly for trucks or trailer trucks or tractor-trailers or articulated trucks or trailers or semitrailers.

Currently it is known, in the field of the manufacturing of trailers for road transport, to resort, in the operations for outfitting the trailer, to adding outfitting accessories, required by law, such as fenders.

For example, DE 297 08 681 U1 discloses a mudguard support system with a control cam and slots for adjustable positioning, a deformable flap for locking, a bolt and nut for securing the mudguard to a mounting rod.

The trailer is composed of a structure the main components of which are the beams or profiled elements or longitudinal members, to which the axles that support the wheels are fixed in a lower region and the superstructures that constitute the specific load configuration (body, refrigerated body, deck, tank and other) are fixed in an upper region.

Such longitudinal members are utilized as a fixing base for supports, which we term tubes or flanged tubes, which are thus used to fix the fender by means of an appropriate device.

Fenders of the known type are usually constituted by a single body, which is made of metal or plastic material, shaped like an arc of approximately 180 degrees, which surrounds the upper surface of the wheels of the vehicle, with which further elements, such as for example splashguards and/or elements that perform antispraying functions and elements for fixing to the vehicle, are subsequently associated.

In order to associate the fender with the vehicle it is known to use an anchoring device constituted by a slider, with a substantially parallelepiped shape, which can be associated slidingly and selectively with a rail provided on the surface of the fender that does not face the tire.

A rigid tab having a semi-circular shape is associated rotatably with one end of the slider and the other free end of the tab can be rested on the slider.

A hole is defined at the free end and accommodates the threaded stem of a screw, which is rendered integral with the slider.

A nut for locking the tab to the slider is then provided.

In order to associate the fender with the vehicle, one begins with the condition in which, after associating the device with the fender, the tab is uncoupled from the slider; it is thus possible to position the latter below a flanged tube which protrudes from the vehicle above the tire, subsequently rotating the tab thereon.

The tab is then rotated, positioning the threaded stem in the hole and locking the components to each other by means of the adapted nut, forming an eye that wraps around the tube.

As an alternative, the nut is coupled beforehand to the threaded stem without tightening it, so as to allow to insert the fender laterally by making the partially tightened tab slide on the tube, to then tighten the nut once the fender has been positioned in an optimum manner.

This solution has some drawbacks: difficulty is in fact found in coupling the nut to the threaded stem, since it is possible to lose the nut during the coupling step due to the limited space.

Moreover, tightening the nut to the threaded stem of the screw also is not easy when the space is limited, since it is not possible, for example to enter with a power screwdriver.

If one had to screw the nut manually, one would perform a slow operation, and the time required would have to be multiplied by the number of devices to be applied and by the number of fenders.

Furthermore, in some cases there is no possibility to insert the fender from the side, forcing the operator to insert it from below.

In any case, the operations for connecting the tube to the fender are long and/or complex.

The aim of the present invention is therefore to solve the highlighted technical problems, avoiding the drawbacks of the cited background art, by providing a device that allows to obtain, rapidly and easily, the anchoring of a fender to a vehicle.

Within this aim, an object of the present invention is to provide a device that allows to achieve such anchoring even in conditions of limited space present between the fender and the vehicle.

Another object of the invention is to provide a device that allows to achieve anchoring without having to use particular tools.

A further object of the invention is to obtain a device that combines the preceding characteristics with the characteristic of limiting installation times both when the fender has to be coupled from below and when it has to be coupled from the side with respect to a tube that is integral with the vehicle.

Another object of the invention is to provide a device that is structurally simple and has low manufacturing costs.

This aim and these and other objects which will become better apparent hereinafter are achieved by a device for anchoring to a tube associated with a vehicle and to a fender, associable to the vehicle and provided with at least one rail, characterized in that it is provided with a slider, which can be associated slidingly and selectively with said rail and from which a first semicircular and elastically deformable tab protrudes and is integral therewith, a second tab being articulated to said slider, frontally to the end, adjacent to said slider, of said first tab, and being provided with first means for locking its position with respect to complementarily shaped second grip means provided on said end of said first tab and on said slider, said first and second tabs, which can be arranged adjacent to the lateral surface of said tube, being provided with third means for the temporary locking of the position with respect to said tube and said fender.

Further characteristics and advantages of the invention will become better apparent from the detailed description of a particular but not exclusive embodiment of the device according to the invention, illustrated by way of non-limiting example in the accompanying drawings, wherein:

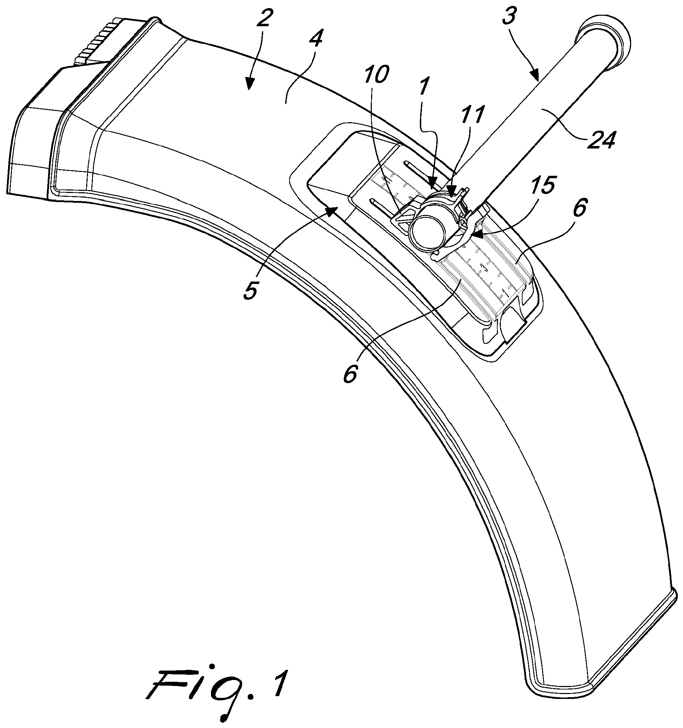

Figure 1 is a lateral perspective view of the anchoring device fastened to a support of a vehicle;

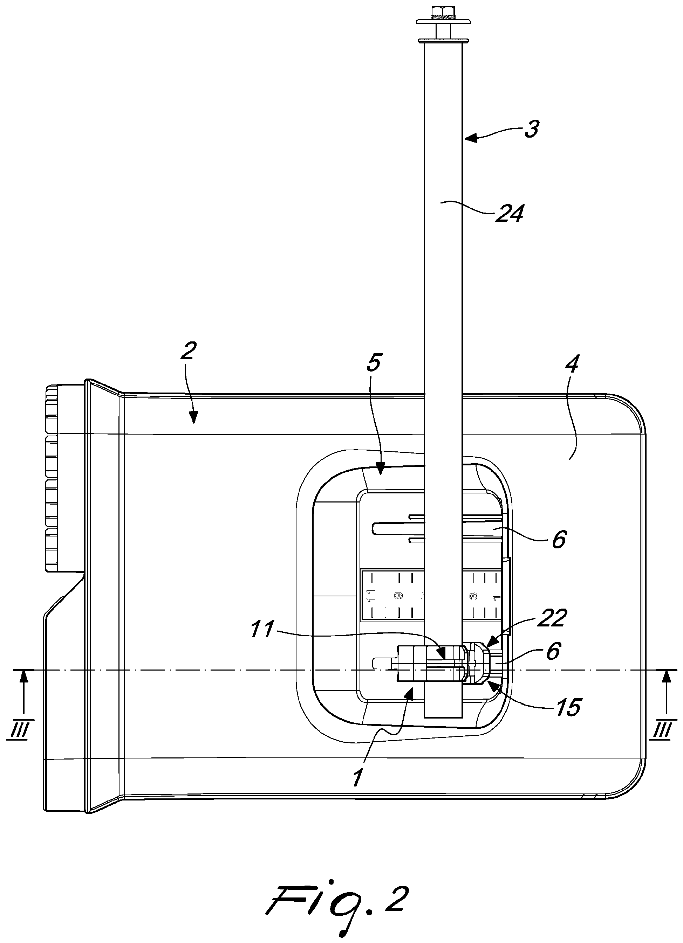

Figure 2 is a top view of the device of the preceding figure;

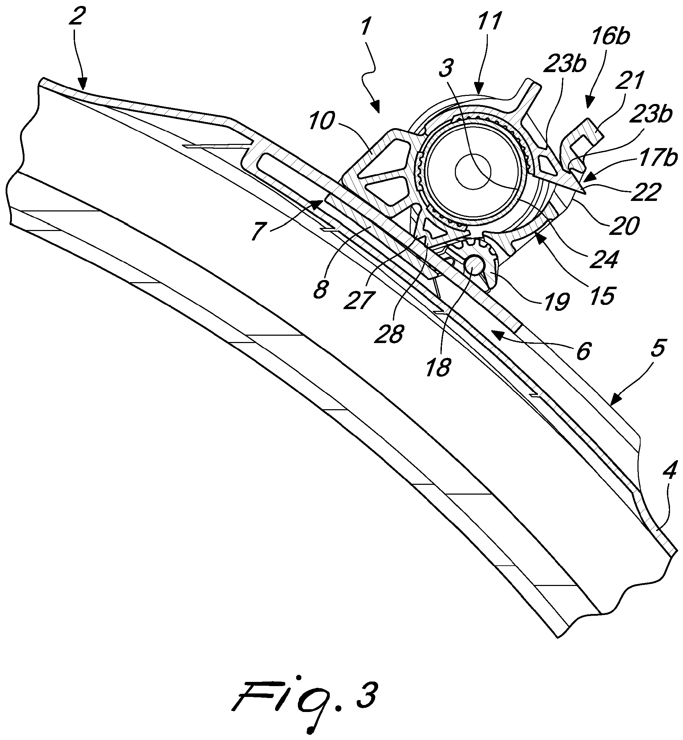

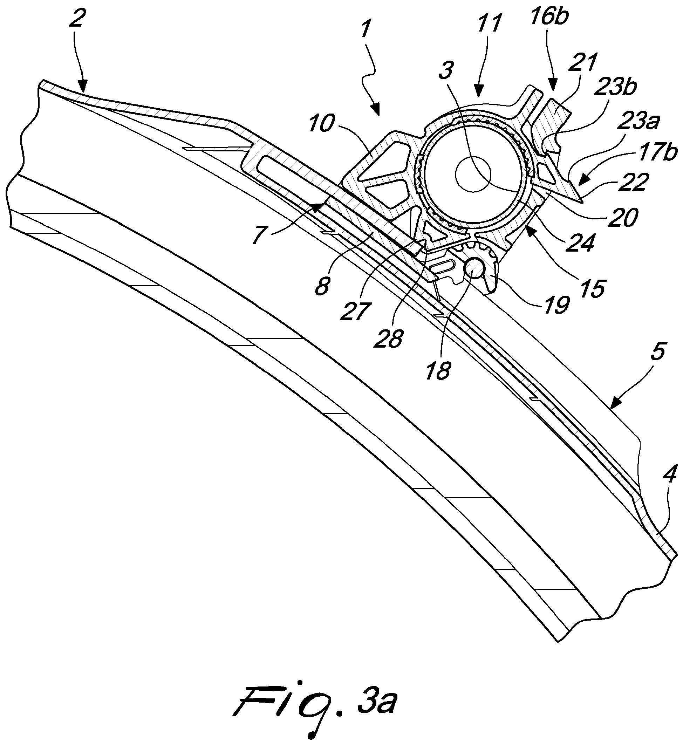

Figure 3 is a sectional view taken along the sectional plane III-III of Figure 2, in a first locking condition;
Figure 3a is a sectional view taken along the sectional plane III-III of Figure 2, in the final locking condition;

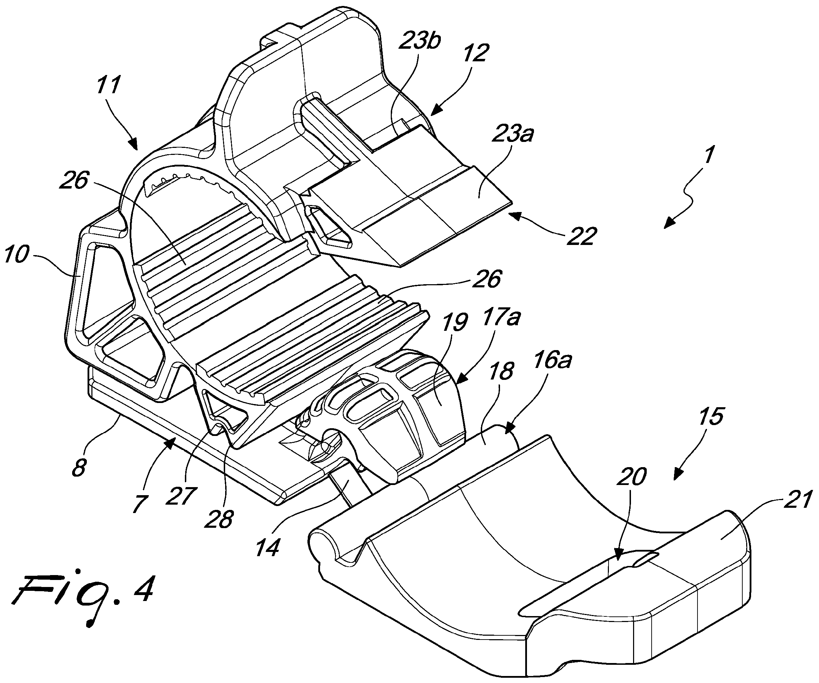

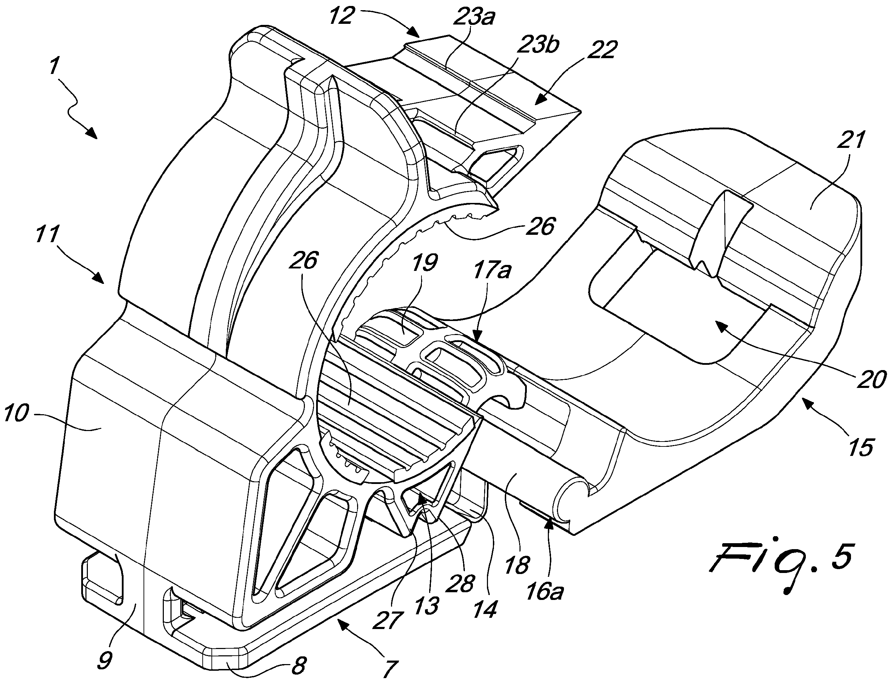

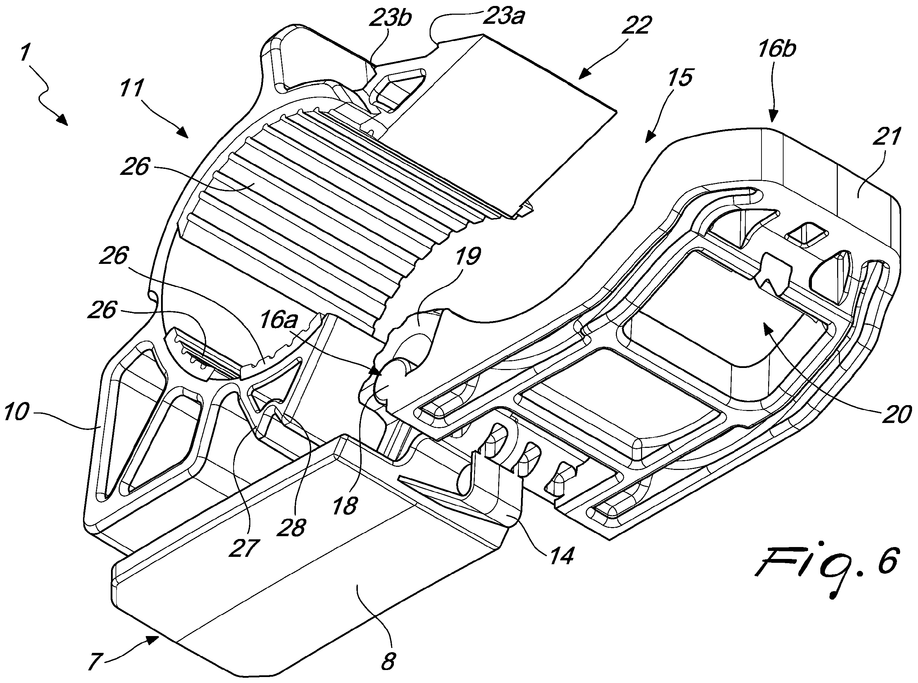

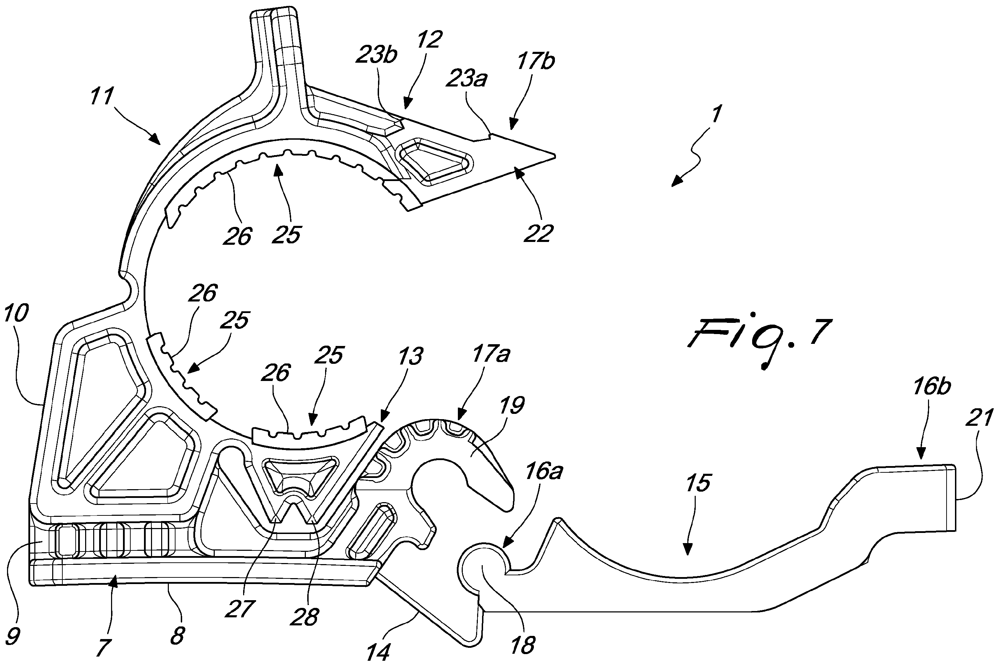

Figures 4, 5, 6 and 7 show the device in various views in the open condition;

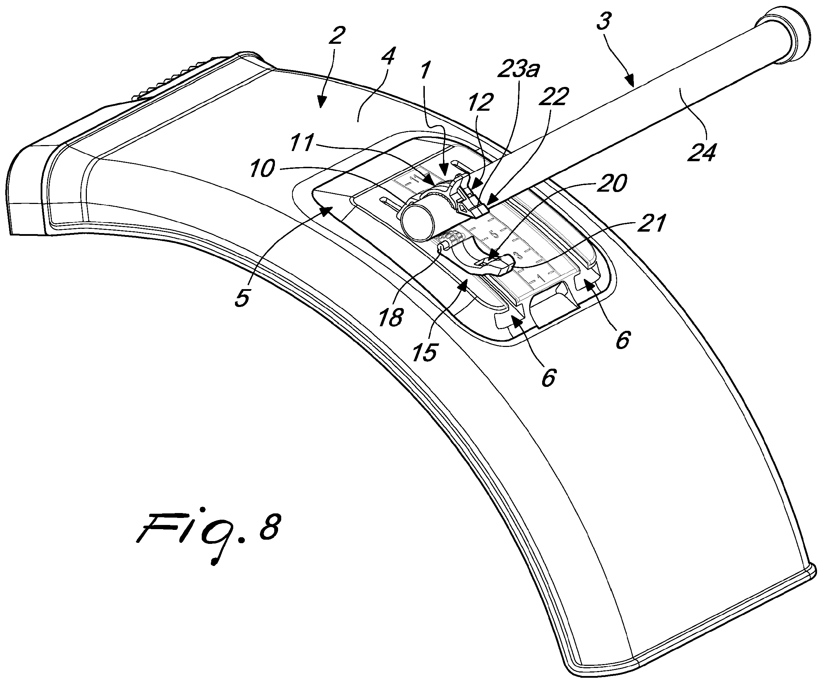

Figure 8 is a view of the anchoring device associated with a support of a vehicle in the open condition.

In the exemplary embodiments that follow, individual characteristics, given in relation to specific examples, may actually be interchanged with other different characteristics that exist in other exemplary embodiments.

With reference to the figures, a device for anchoring to a fender 2 and to a flanged or non-flanged tube 3 of a vehicle, particularly for trucks or trailer trucks or tractor-trailers or articulated vehicles or trailers or semitrailers, is designated by the reference numeral 1.

The fender 2, that has transversely an approximately C-shaped arclike configuration and lies substantially on a circular arc, has, on the external surface 4 facing away from the tire, at least one rail 5 having at least one seat 6 arranged longitudinally to the fender 2, which accommodates a complementarily shaped slider 7, which can be associated slidingly and selectively therewith.

The slider 7 preferably has a rectangular shape in plan view and a T-shaped cross-section so as to define a flat head 8 and a stem 9 with one end of which a first tab 11, having a substantially semicircular shape and provided with a free end 12 and an end 13 adjacent to the underlying slider 7, is rendered integral by means of a connecting element 10 of a chosen shape.

The first tab 11 is elastically deformable, since the free end 12 can flex in the direction of said underlying slider 7.

A second tab 15 is articulated to the slider 7 at and frontally to the end 13 of the first tab 11, by means of a deformable tongue 14 which acts as a hinge.

The second tab 15 is provided with first means 16a, 16b for locking its position with respect to complementarily shaped second grip means 17a, 17b provided on the end 13 of the first tab 11 and on the slider 7.

The first locking means 16a are constituted by a cylindrical detent 18 which extends transversely to the end of the second tab 15 associated with the deformable tongue 14.

The second grip means 17a are constituted by a pawl 19 which protrudes, in the direction of the second tab 15, from the flat head 8 adjacent to the end 13.

A lifting of the second tab 15 corresponds to the arrangement of the detent 18 in front of the pawl 19: a subsequent pressure applied to the tab 15 corresponds to the engagement and temporary locking of the second tab 15 to the pawl 19.

The first locking means 16b are constituted by a seat 20 which is provided transversely to the second tab 15 at its free end 21.

The second grip means 17b are constituted by a wedge 22 which protrudes, in the direction of the second tab 15, from the free end 12 of the first tab 11.

The wedge 22 has a shape that is complementary to the seat 20 and is provided with a first tooth 23a and with a separate second tooth 23b for temporary engagement with the seat 20.

The first and second teeth 23a, 23b are arranged mutually parallel and slightly spaced from each other.

After locking the second tab 15 to the pawl 19, it is sufficient to make the tooth 23a engage the seat 20 in order to obtain a first temporary locking between the first and second tabs 11, 15; a subsequent movement of the second tab 15 allows to achieve the engagement of the second tooth 23b with the seat 20 so as to achieve temporary, but stable, engagement between the first and second tabs 11, 15.

In this manner one obtains a containment seat or eye for the tube 3 the lateral surface 24 of which is arranged adjacent to third means 25 for temporary locking the position of the first and second tabs 11, 15 with respect to the tube 3.

The third temporary locking means 25 are constituted by one or more series of blocks or pads 26, advantageously made of compressible plastic material, which are associated with and protrude transversely from the surfaces of the first tab 11 and the end 13 which face the tube 3.

Thus, part of the surfaces of the first and second tabs 11, 15 is clamped onto the tube 3 once locking between the first and second tabs 11, 15 is achieved.

Release for maintenance or replacement, if any, is easy, since it is sufficient to cause the uncoupling of the tooth 23 from the seat 20 facilitated by the elastic deformation of the wedge 22.

Two teeth 27, 28, which protrude from the end 13 and that allow to lock the slider 7 to the fender 2 by means of an interaction with the rail 5, cooperate to constitute the third temporary locking means 25.

The positioning of the second tooth 23b at the seat 20 allows to generate a pre-compression both on the internal surface of the first and second tabs 11, 15 and of the teeth 27, 28 on the surface of the rail 5, locking the device to the fender 2.

It has thus been found that the invention has achieved the intended aim and objects, a device having been devised which allows to achieve, rapidly and easily, the anchoring of a fender to a vehicle, both when the fender has to be coupled from below and when it has to be coupled from the side with respect to a tube that is integral with the vehicle.

Furthermore, the device allows to obtain the anchoring even in conditions of limited space present between the fender and the vehicle, without using particular tools.

The invention is of course susceptible of numerous modifications and variations, all of which are within the scope of the appended claims.

The materials used, as well as the shapes that constitute the single components of the invention, may of course be more pertinent according to the specific requirements.

The various means for performing certain different functions need not certainly coexist only in the illustrated embodiment but can be present per se in many embodiments, including ones that are not illustrated.

The characteristics indicated as advantageous, convenient or the like, may also be omitted or replaced by equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vehicle comprising:
a fender (2), associable to the vehicle and provided with at least one rail (5),
a tube (3) associated with the vehicle and to the fender (2), and
a device (1) for anchoring to the tube (3),
said device (1) being provided with a slider (7), which can be associated slidingly and selectively with said rail (5) and from which
a first semicircular and elastically deformable tab (11) protrudes and is integral therewith, said first tab (11) having an end (12) which is free and an end (13) which is adjacent to said underlying slider,
a second tab (15) being articulated to said slider (7), frontally to the end (13), adjacent to said slider (7), of said first tab (11), and being provided with first means (16a, 16b) for locking its position with respect to complementarily shaped second grip means (17a, 17b) provided on the free end (12) of said first tab (11) and on said slider (7),
said first and second tabs (11, 15) can be arranged adjacent to the lateral surface (24) of said tube (3),
said device (1) being **characterized in that**
it is further provided with third means (25) for the temporary locking of the position with respect to said tube (3) and said fender (2), and **characterized in that** two teeth (27, 28) cooperate to constitute said third temporary locking means (25), and protrude from said end (13) and are configured to interact with said rail (5).

2. The vehicle according to claim 1, **characterized in that** said first tab (11) has a substantially semicircular shape, and said first tab (11) being elastically deformable, said free end (12) being able to flex in the direction of said underlying slider (7).

3. The vehicle according to claim 1, **characterized in that** said second tab (15) is articulated to said slider (7) at and frontally to said end (13) of said first tab (11), by means of a deformable tongue (14) which acts as a hinge, and is provided with first means (16a, 16b) for locking its position with respect to complementarily shaped second grip means (17a, 17b) provided on said end (13) of said first tab (11) and on said slider (7), said first locking means (16a) being constituted by a cylindrical detent (18) which extends transversely to the end of said second tab (15) associated with said deformable tongue (14).

4. The vehicle according to claim 3, **characterized in that** said second grip means (17a) are constituted by a pawl (19) which protrudes, in the direction of said second tab (15), from said flat head (8) adjacent to said end (13).

5. The vehicle according to claim 4, **characterized in that** a lifting of said second tab (15) corresponds to the arrangement of said detent (18) in front of said pawl (19), a subsequent pressure applied to said tab (15) corresponding to the engagement and temporary locking of said second tab (15) to said pawl (19).

6. The vehicle according to claim 2, **characterized in that** said first locking means (16b) are constituted by a seat (20) which is provided transversely to said second tab (15) at its free end (21), said second grip means (17b) being constituted by a wedge (22) which protrudes, in the direction of said second tab (15), from said free end (12) of said first tab (11).

7. The vehicle according to claim 6, **characterized in that** said wedge (22) has a shape that is complementary to said seat (20) and is provided with a first tooth (23a) and with a separate second tooth (23b) for temporary engagement with said seat (20) so as to form a seat or an eye for the containment of said tube (3), the lateral surface (24) of which arranges itself adjacent to third means (25) for temporary locking of the position of said first and second tabs (11, 15) with respect to said tube (3), said first and second teeth (23a, 23b) being arranged mutually parallel and slightly spaced from each other.

8. The vehicle according to one or more of the preceding claims, **characterized in that** said third temporary locking means (25) are constituted by one or more series of blocks or pads (26) made of compressible plastic material, which are associated with and protrude transversely from the surfaces of said first and second tabs (11) and end (13) that face said tube (3).

9. The vehicle according to one or more of the preceding claims, **characterized in that** said slider (7) is locked to said fender (2) by virtue of the presence of a pair of teeth (27, 28) which protrude from said end (13) and interact with said rail (5).

## Patentansprüche

1. Fahrzeug, umfassend:
- einen Kotflügel (2), der mit dem Fahrzeug verbindbar ist und mit zumindest einer Schiene (5) versehen ist,
- ein Rohr (3), das mit dem Fahrzeug und dem Kotflügel (2) verbunden ist, und
- eine Vorrichtung (1) zur Verankerung am Rohr (3),
- wobei die Vorrichtung (1) mit einem Schieber (7) versehen ist, der gleitend und wahlweise mit der Schiene (5) verbunden werden kann und von dem eine erste halbkreisförmige und elastisch verformbare Lasche (11) hervorsteht und einstückig mit diesem ausgebildet ist, wobei die erste Lasche (11) ein freies Ende (12) und ein an den darunterliegenden Schieber angrenzendes Ende (13) aufweist,
- wobei eine zweite Lasche (15), die am Schieber (7), frontal zum Ende (13) der ersten Lasche (11), das an den Schieber (7) angrenzt, angelenkt ist, und mit ersten Mitteln (16a, 16b) zur Verriegelung ihrer Position in Bezug auf komplementär geformte zweite Eingriffsmittel (17a, 17b) versehen ist, die am freien Ende (12) der ersten Lasche (11) und am Schieber (7) vorgesehen sind,
- wobei die erste und die zweite Lasche (11, 15) angrenzend an die Seitenfläche (24) des Rohrs (3) angeordnet werden können,
- wobei die Vorrichtung (1) **dadurch gekennzeichnet ist, dass**
- sie ferner mit dritten Mitteln (25) zur vorübergehenden Verriegelung der Position in Bezug auf das Rohr (3) und den Kotflügel (2) versehen ist, und **dadurch gekennzeichnet ist, dass** zwei Zähne (27, 28) zusammenwirken, um die dritten vorübergehenden Verriegelungsmittel (25) zu bilden, und aus dem Ende (13) hervorstehen und eingerichtet sind, um mit der Schiene (5) zusammenzuwirken.

2. Fahrzeug nach Anspruch 1, **dadurch gekennzeichnet, dass** die erste Lasche (11) eine im Wesentlichen halbkreisförmige Form aufweist und die erste Lasche (11) elastisch verformbar ist, wobei sich das freie Ende (12) in Richtung des darunterliegenden Schiebers (7) biegen kann.

3. Fahrzeug nach Anspruch 1, **dadurch gekennzeichnet, dass** die zweite Lasche (15) am Schieber (7) am und frontal zum Ende (13) der ersten Lasche (11) mittels einer verformbaren Zunge (14) angelenkt ist, die als Scharnier wirkt und mit ersten Mitteln (16a, 16b) zum Verriegeln ihrer Position in Bezug auf komplementär geformte zweite Eingriffsmittel (17a, 17b) versehen ist, die am Ende (13) der ersten Lasche (11) und am Schieber (7) vorgesehen sind, wobei die ersten Verriegelungsmittel (16a) aus einer zylindrischen Arretierung (18) gebildet werden, die sich quer zum Ende der zweiten Lasche (15) erstreckt, die mit der verformbaren Zunge (14) verbunden ist.

4. Fahrzeug nach Anspruch 3, **dadurch gekennzeichnet, dass** die zweiten Eingriffsmittel (17a) aus einer Klinke (19) gebildet werden, die in Richtung der zweiten Lasche (15) aus dem flachen Kopf (8) neben dem Ende (13) hervorsteht.

5. Fahrzeug nach Anspruch 4, **dadurch gekennzeichnet, dass** ein Anheben der zweiten Lasche (15) der Anordnung der Arretierung (18) vor der Klinke (19) entspricht, wobei ein nachfolgender Druck auf die Lasche (15) ausgeübt wird, der dem Eingriff und der vorübergehenden Verriegelung der zweiten Lasche (15) an der Sperrklinke (19) entspricht.

6. Fahrzeug nach Anspruch 2, **dadurch gekennzeichnet, dass** die ersten Verriegelungsmittel (16b) durch eine Aufnahme (20) gebildet werden, die quer zur zweiten Lasche (15) am freien Ende (21) vorgesehen ist, wobei die zweiten Eingriffsmittel (17b) durch einen Keil (22) gebildet werden, der in Richtung der zweiten Lasche (15) aus dem freien Ende (12) der ersten Lasche (11) hervorsteht.

7. Fahrzeug nach Anspruch 6, **dadurch gekennzeichnet, dass** der Keil (22) eine zur Aufnahme (20) komplementäre Form aufweist und mit einem ersten Zahn (23a) und einem separaten zweiten Zahn (23b) zum vorübergehenden Eingriff mit der Aufnahme (20) versehen ist, um eine Aufnahme oder eine Öse zur Aufnahme des Rohrs (3) zu bilden, dessen Seitenfläche (24) sich selbst neben dritten Mitteln (25) zur vorübergehenden Verriegelung der Position der ersten und zweiten Laschen (11, 15) in Bezug auf das Rohr (3) befindet, wobei die ersten und zweiten Zähne (23a, 23b) parallel zueinander und in geringem Abstand voneinander angeordnet sind.

8. Fahrzeug nach einem oder mehreren der vorhergehenden Ansprüche, **dadurch gekennzeichnet, dass** die dritten vorübergehenden Verriegelungsmittel (25) durch eine oder mehreren Reihen von Blöcken oder Polstern (26) aus komprimierbarem Kunststoffmaterial gebildet werden, die mit den Oberflächen der ersten und zweiten Laschen (11) und mit dem Rohr (3) zugewandten Ende (13) verbunden sind und quer von diesen hervorstehen.

9. Fahrzeug nach einem oder mehreren der vorhergehenden Ansprüche, **dadurch gekennzeichnet, dass** der Schieber (7) aufgrund des Vorhandenseins eines Paars von Zähnen (27, 28), die aus dem Ende (13) hervorstehen und mit der Schiene (5) zusammenwirken, am Kotflügel (2) verriegelt ist.

## Revendications

1. Véhicule comprenant :
un garde-boue (2), pouvant être associé au véhicule et muni d'au moins un rail (5),
un tube (3) associé au véhicule et au garde-boue (2), et
un dispositif (1) pour l'ancrage au tube (3),
ledit dispositif (1) étant muni d'un coulisseau (7), qui peut être associé de manière coulissante et sélective audit rail (5) et à partir duquel fait saillie une première languette semi-circulaire et élastiquement déformable (11), formée d'un seul tenant avec celui-ci, ladite première languette (11) comportant une extrémité (12) libre et une extrémité (13) adjacente audit coulisseau sous-jacent,
une seconde languette (15) articulée sur ledit coulisseau (7), à l'avant de l'extrémité (13) de ladite première languette (11) adjacente audit coulisseau (7), et munie de premiers moyens (16a, 16b) destinés à verrouiller sa position par rapport à des deuxièmes moyens de préhension (17a, 17b) de forme complémentaire prévus sur l'extrémité libre (12) de ladite première languette (11) et sur ledit coulisseau (7),
lesdites première et seconde languettes (11, 15) peuvent être disposées adjacentes à la surface latérale (24) dudit tube (3),
ledit dispositif (1) étant **caractérisé en ce qu'**
il est en outre muni de troisièmes moyens (25) destinés au verrouillage temporaire de la position par rapport audit tube (3) et audit garde-boue (2), et **caractérisé en ce que** deux dents (27, 28) coopèrent pour constituer lesdits troisièmes moyens de verrouillage temporaire (25), font saillie depuis ladite extrémité (13) et sont configurées pour interagir avec ledit rail (5).

2. Véhicule selon la revendication 1, **caractérisé en ce que** ladite première languette (11) présente une forme sensiblement semi-circulaire, et ladite première languette (11) étant élastiquement déformable, ladite extrémité libre (12) pouvant fléchir dans la direction dudit coulisseau sous-jacent (7).

3. Véhicule selon la revendication 1, **caractérisé en ce que** ladite seconde languette (15) est articulée sur ledit coulisseau (7) au niveau et en avant de ladite extrémité (13) de ladite première languette (11), au moyen d'une lame déformable (14) qui fait office de charnière, et est pourvue de premiers moyens (16a, 16b) pour verrouiller sa position par rapport à des deuxièmes moyens de préhension (17a, 17b) de forme complémentaire prévus sur ladite extrémité (13) de ladite première languette (11) et sur ledit coulisseau (7), lesdits premiers moyens de verrouillage (16a) étant constitués d'un cran cylindrique (18) qui s'étend transversalement à l'extrémité de ladite seconde languette (15) associée à ladite lame déformable (14).

4. Véhicule selon la revendication 3, **caractérisé en ce que** lesdits deuxièmes moyens de préhension (17a) sont constitués d'un cliquet (19) qui fait saillie, en direction de ladite seconde languette (15), à partir de ladite tête plate (8) adjacente à ladite extrémité (13).

5. Véhicule selon la revendication 4, **caractérisé en ce que** le soulèvement de ladite seconde languette (15) correspond au positionnement dudit cran (18) devant ledit cliquet (19), une pression appliquée ensuite sur ladite languette (15) correspondant à l'engagement et au verrouillage temporaire de ladite seconde languette (15) sur ledit cliquet (19).

6. Véhicule selon la revendication 2, **caractérisé en ce que** lesdits premiers moyens de verrouillage (16b) sont constitués d'un siège (20) qui est disposé transversalement par rapport à ladite seconde languette (15) au niveau de son extrémité libre (21), lesdits deuxièmes moyens de préhension (17b) étant constitués d'un coin (22) qui fait saillie, en direction de ladite seconde languette (15), à partir de ladite extrémité libre (12) de ladite première languette (11).

7. Véhicule selon la revendication 6, **caractérisé en ce que** ledit coin (22) présente une forme complémentaire à celle dudit siège (20) et est pourvu d'une première dent (23a) ainsi que d'une seconde dent distincte (23b) destinée à s'engager temporairement dans ledit siège (20) de manière à former un siège ou un œillet pour le logement dudit tube (3), dont la surface latérale (24) se place adjacente à des troisièmes moyens (25) destinés au verrouillage temporaire de la position desdites première et seconde languettes (11, 15) par rapport audit tube (3), lesdites première et seconde dents (23a, 23b) étant disposées parallèlement l'une à l'autre et légèrement espacées l'une de l'autre.

8. Véhicule selon l'une ou plusieurs des revendications précédentes, **caractérisé en ce que** lesdits troisièmes moyens de verrouillage temporaire (25) sont constitués d'une ou plusieurs séries de blocs ou de patins (26) en matière plastique compressible, qui sont associés à et font saillie transversalement depuis les surfaces desdites première et seconde languettes (11) et d'extrémité (13) qui font face audit tube (3).

9. Véhicule selon l'une ou plusieurs des revendications précédentes, **caractérisé en ce que** ledit coulisseau (7) est verrouillé sur ledit garde-boue (2) grâce à la présence d'une paire de dents (27, 28) qui font saillie depuis ladite extrémité (13) et interagissent avec ledit rail (5).
